**Europäisches Patentamt**

**European Patent Office**

**Office européen des brevets**

(19)

(11) **EP 1 341 004 A1**

(12) ## DEMANDE DE BREVET EUROPEEN

(43) Date de publication:
**03.09.2003 Bulletin 2003/36**

(51) Int Cl.⁷: **G01V 1/00**

(21) Numéro de dépôt: **03290400.5**

(22) Date de dépôt: **18.02.2003**

| | |
|---|---|
| (84) Etats contractants désignés:<br>**AT BE BG CH CY CZ DE DK EE ES FI FR GB GR HU IE IT LI LU MC NL PT SE SI SK TR**<br>Etats d'extension désignés:<br>**AL LT LV MK RO** | (71) Demandeur: **Institut Francais du Petrole**<br>**92852 Rueil-Malmaison Cedex (FR)** |
| (30) Priorité: **01.03.2002 FR 0202666** | (72) Inventeur: **Becquey, Marc**<br>**92500 Rueil-Malmaison (FR)** |

(54) **Méthode et dispositif de prospection sismique par émission simultanée de signaux sismiques à base de séquences pseudo aléatoires**

(57)  -- Méthode et dispositif de prospection sismique par émission simultanée par plusieurs vibrateurs de signaux sismiques obtenus en modulant en phase un signal périodique dont l'amplitude et les dérivées par rapport au temps de l'amplitude s'annulent au début et à la fin de chaque période, par des séquences pseudo aléatoires.

- On capte par des récepteurs couplés avec la formation, les signaux sismiques renvoyés par les discontinuités du sous-sol en réponse aux signaux périodiques émis et on les enregistre dans un système d'acquisition et d'enregistrement. Les signaux sismiques émis sont formés soit à partir de séquences élémentaires d'une durée au moins égale au produit du nombre de sources sismiques vibrant simultanément par le temps d'écoute, soit à partir de cette séquence élémentaire augmentée, avant et après, de parties d'une durée au moins égale au temps d'écoute, la réception et l'enregistrement des signaux renvoyés par les discontinuités du sous-sol en réponse aux signaux émis, et le traitement des signaux enregistrés. La contribution respective de chacune des différentes sources sismiques est isolée en corrélant les signaux reçus et enregistrés soit par des signaux construits à partir de la dite séquence élémentaire, augmentée, avant et après, de parties d'une durée au moins égale au temps d'écoute, obtenues par permutation circulaire, soit de la dite séquence élémentaire.

- Applications à la prospection sismique ou la surveillance sismique de gisements, par exemple.

**FIG.5**

EP 1 341 004 A1

## Description

La présente invention concerne une méthode et un dispositif de prospection sismique terrestre par émission simultanée dans le sol de signaux sismiques émis par plusieurs vibrateurs ou groupes de vibrateurs, ces signaux obtenus en codant un signal par des séquences pseudo aléatoires, et notamment d'un signal périodique modulé en phase par de telles séquences.

## Etat de la technique

On connaît des procédés de prospection sismique terrestre comportant la transmission dans le sol pendant plusieurs secondes, d'un signal périodique dont la fréquence varie de façon continue à l'intérieur d'une bande de fréquence, la réception par des capteurs des signaux réfléchis par des réflecteurs souterrains et l'enregistrement des signaux reçus. Du fait de la durée de l'émission, les signaux captés à chaque instant sont des combinaisons de signaux réfléchis par des réflecteurs situés à des profondeurs très différentes. L'image des différents réflecteurs du sous-sol ne peut être retrouvée que par un traitement des signaux captés comportant leur mise en corrélation avec les signaux émis. Le résultat du traitement est identique à celui obtenu en convoluant la fonction d'auto-corrélation du signal émis par la suite des coefficients de réflexion des différents réflecteurs. On obtient une trace sismique qui est l'image des interfaces entre les différentes couches géologiques à mi-distance entre les emplacements d'émission et de réception. Un tel procédé est décrit, par exemple par le brevet US N° 2.688.124.

Ce procédé présente certains inconvénients. La fonction d'auto-corrélation qui est obtenue dans ce cas présente des pics secondaires de part et d'autre du pic principal, dont l'amplitude n'est pas négligeable. En outre, un intervalle de temps au moins égal à la durée de propagation aller et retour des ondes émises jusqu'au réflecteur le plus profond de la zone explorée que l'on désigne par "intervalle d'écoute" doit être ménagé entre deux séquences d'émission successives, de manière que les signaux forts captés au début de la séquence d'enregistrement correspondante, ne puissent venir masquer les signaux les plus faibles émanant de réflecteurs plus lointains, captés à la fin de la séquence d'enregistrement précédente. Les interruptions nécessaires de l'émission pendant un intervalle de temps d'écoute relativement important ont pour effet de limiter l'énergie transmise.

On connaît aussi un autre procédé où différents vibrateurs émettent simultanément des signaux avec un balayage en fréquence identique, leurs émissions étant décalées d'un temps au moins égal au temps d'écoute.

Séquences binaires pseudo aléatoires

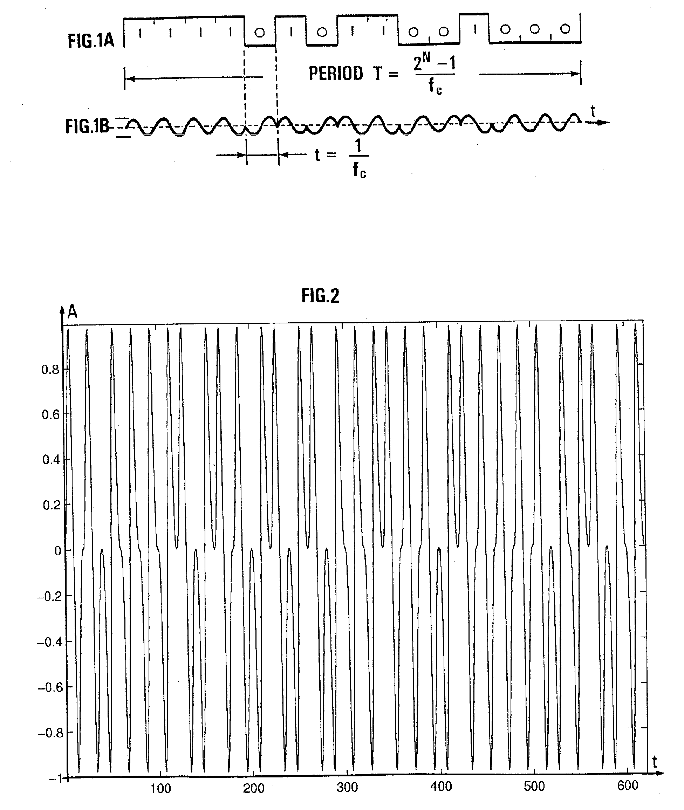

D'autres procédés connus de prospection sismique terrestre exploitent une technique bien connue dans le domaine des communications et du radar. Ils comportent l'utilisation de sources périodiques transmettant des signaux obtenus en modulant la phase d'un signal porteur périodique par un signal binaire ou code pseudo aléatoire constitué d'une séquence d'éléments pouvant prendre deux valeurs logiques 0 ou 1. Comme le montre la Fig.1 l'ordre de succession de ces valeurs est choisi de manière à présenter un caractère aléatoire.

Lorsque, pour un tel code, toute suite de n bits successifs (n entier) ne peut se répéter à l'identique qu'après une séquence de $(2^n - 1)$ bits la séquence est dite «Séquence Binaire de Longueur Maximale», en abrégé SBLM. Ces séquences binaires pseudo aléatoires peuvent être utilisées pour moduler en phase un signal périodique, chaque élément de la séquence étant associé à une période du signal, en conservant ou en inversant le signe suivant qu'il s'agit d'un « 1 » ou d'un « 0 ». On désignera par le terme de « séquence élémentaire » une portion du signal périodique modulé par une séquence binaire de $(2^n - 1)$ termes, de durée $(2^n - 1).Tc$ où Tc représente la période du signal porteur.

La corrélation par une séquence élémentaire, d'un signal composé par la répétition de cette séquence élémentaire modulée par la séquence élémentaire (Fig. 2b) donne (Fig.2c) des pics espacés (en temps) de la durée de la séquence $T_s$ et un niveau minimal (voire nul) entre les pics, ou, plus exactement sur la durée de la séquence moins la période de la porteuse $T_c$. Le rapport du pic de corrélation au bruit de corrélation est égal au nombre de termes de la séquence.

De tels procédés sont décrits, par exemple, dans les brevets US N° 3 234 504, 3 264 606, 4 034 333 et 4 069 470.

Par le brevet US 3 234 504, on connaît une méthode de prospection sismique où l'on applique à un vibrateur des signaux modulés sans point de rebroussement dont le spectre d'amplitude est centré sur la fréquence nulle.

Par le brevet FR 2 589 587 (USP n° 4 780 856) du demandeur, on connaît une méthode de prospection sismique marine où les moyens d'émission comportent au moins un vibrateur remorqué par un navire progressant de façon continue le long d'un profil sismique à étudier, émettant une suite ininterrompue de séquences constituées chacune d'une signal porteur périodique modulé en phase par un signal de codage binaire pseudo aléatoire de longueur maximale. Les signaux renvoyés par les discontinuités du milieu sont corrélés avec les signaux codés émis, de manière à obtenir des pics de corrélation à des intervalles de temps inférieurs et au plus égaux à la période de répétition des séquences d'émission successives. La source périodique peut être unique, la corrélation est effectuée entre les signaux reçus et alternativement deux séquences de signaux émis déductibles l'une de l'autre par un décalage de temps inférieur à la période de répétition des séquences. On choisit par exemple un décalage égal à la demi-période de répétition des séquences de signaux émis.

On peut utiliser aussi au moins deux sources périodiques émettant simultanément des séquences de signaux identiques mais décalés dans le temps l'un par rapport à l'autre et on établit une corrélation entre les signaux reçus qui correspondent aux signaux émis simultanément par les sources et au moins une séquence des signaux codés, de manière à obtenir en alternance des pics de corrélation correspondant à chacune des sources périodiques.

L'utilisation en prospection sismique terrestre de vibrateurs émettant simultanément ou insuffisamment séparés dans le temps présentent des inconvénients liés à différents facteurs : le bruit d'auto-corrélation, les harmoniques et les ondes lentes.

Bruit d'autocorrélation

Le signal vibrosismique est compressé en corrélant les signaux enregistrés par le signal pilotant le vibrateur (ou par une combinaison des signaux des accéléromètres de plaque et de masse du vibrateur). On obtient ainsi l'équivalent de la corrélation de la série des coefficients de réflexion par l'autocorrélation du signal émis. Le signal émis est généralement un balayage linéaire en fréquence, dont le spectre d'amplitude est soit un créneau, soit de préférence une courbe en cloche pour diminuer l'amplitude des rebonds.

La question des bruits d'autocorrélation se pose pour tous les enregistrements vibrosismiques.

Les rebonds diminuent avec le temps en $\frac{1}{t}$ sensiblement. Pour un enregistrement isolé, les rebonds d'autocorrélation des grandes valeurs de début de trace sont suffisamment atténués au moment où reviennent les réflexions les plus faibles de fin de trace. Dans le cas d'un balayage par glissement de fréquence, l'enregistrement est semi-continu et les rebonds des grandes valeurs se retrouvent en avant et en arrière et peuvent interférer sur les valeurs faibles des réflexions profondes du tir précédent si le temps de glissement est insuffisant.

Harmoniques

Pour un enregistrement vibrosismique isolé, la distorsion harmonique rajoute des oscillations au signal corrélé. Si le balayage est effectué depuis les basses fréquences vers les hautes fréquences, les oscillations dues à la corrélation des harmoniques par le signal pilote sont des précurseurs. Ainsi, sauf pour les traces les plus proches sur lesquelles se trouve le bruit de surface, les bruits dus à la corrélation des harmoniques se mélangent avec un signal plus précoce, donc en principe plus fort. Pour les enregistrements continus de type balayage glissant (« slip sweep ») le bruit dû aux harmoniques des arrivées précoces d'un tir peut se superposer aux arrivées tardives, plus faibles, du tir précédent.

Ondes lentes

Si le temps qui sépare le début de deux tirs successifs diminue, les ondes les plus lentes d'un tir, ondes aériennes et ondes de surface, risquent de se retrouver sur le tir suivant. Les balayages étant identiques d'un tir à l'autre, l'onde aérienne et les bruits de surface seront comprimés de la même façon sur les deux tirs.

Séquences à corrélation minimale.

Il est connu des gens de l'art qu'il existe pour chaque taille de SBLM, des couples à corrélation minimale pour lesquelles le rapport du pic central au plus grand pic secondaire est égal à :

$$\frac{2^n-1}{1+2^{partieentire\left(\frac{n+2}{2}\right)}}$$

soit environ 30 dB pour n=11, correspondant à $2^{11}-1 = 2047$ périodes du signal porteur (34 secondes pour une porteuse de 60 Hz). Il existe des séquences connectées dont les corrélations sont deux à deux minimales. Le nombre de séquences de chaque ensemble dépend de la taille des séquences. Pour une séquence de 2047 éléments, ce nombre est de 4.

Par le brevet FR 2 818 753 du demandeur, on connaît une méthode permettant de réaliser des opérations de prospection ou de surveillance d'une formation souterraine par ondes élastiques. Elle comporte l'émission dans le sol de séquences élémentaires formées par codage d'un signal par des séquences pseudo aléatoires, la réception et l'enregistrement des signaux renvoyés par les discontinuités du sous-sol en réponse aux signaux émis, et le traitement des signaux enregistrés par corrélation avec des signaux composés à partir des signaux émis.

Les signaux sont émis simultanément par plusieurs sources sismiques pilotées chacune par un signal composé d'une séquence élémentaire d'une durée au moins égale au produit du nombre de sources sismiques vibrant simultanément par le temps d'écoute, la contribution respective de chacune des différentes sources sismiques étant séparée en corrélant les signaux reçus et enregistrés par une portion de signal cyclique construite à partir de la dite séquence élémentaire, augmentée, à droite et à gauche (avant et après), de parties d'une durée au moins égale au temps d'écoute, obtenues par permutation circulaire, cette séquence élémentaire occupant le centre de cette portion de signal cyclique.

Les signaux peuvent encore être émis par plusieurs sources sismiques pilotées chacune par un signal composé d'une séquence élémentaire augmentée avant et après de parties au moins égales au temps d'écoute, obtenues par permutation circulaire, cette séquence élémentaire occupant le centre de cette portion de signal cyclique, la contribution respective de chacune des différentes sources sismiques étant séparée en corrélant les signaux reçus et enregistrés par des signaux construits à partir de la dite séquence élémentaire.

Cette méthode, qui utilise des signaux périodiques obtenus par modulation de phase d'un signal porteur par des séquences binaires pseudo aléatoires, et cet enregistrement simultané de plusieurs sources sismiques, permet de minimiser les bruits de corrélation et d'éviter les bruits de corrélation d'harmoniques. Elle se prête mieux à la pratique de l'enregistrement simultané que les balayages en fréquence utilisés classiquement en prospection sismique terrestre.

Cependant, on observe que la modulation en phase d'une sinusoïde par un code pseudo aléatoire fait apparaître des points de rebroussement aux changements de signe du code. Le signal est plus ou moins distordu à l'émission. La distorsion s'exprime différemment au passage entre deux termes de même signe de la séquence et entre deux termes de signes différents. Il s'ensuit que les différents termes ne se somment pas correctement si bien que la corrélation n'atteint pas les performances recherchées.

**La méthode selon l'invention**

La méthode selon l'invention permet de réaliser des opérations de prospection ou de surveillance d'une formation souterraine par ondes élastiques. Elle comprend l'émission simultanée dans le sol d'ondes sismiques par plusieurs sources sismiques pilotées chacune par un signal composé soit d'une séquence élémentaire formée par codage d'un signal par des séquences pseudo aléatoires, cette séquence élémentaire étant d'une durée au moins égale au produit du nombre de sources sismiques vibrant simultanément par le temps d'écoute, soit respectivement de cette séquence élémentaire augmentée avant et après de parties d'une durée au moins égale au temps d'écoute, la réception et l'enregistrement des signaux renvoyés par les discontinuités du sous-sol en réponse aux signaux émis, et le traitement des signaux enregistrés, la contribution respective de chacune des différentes sources sismiques étant séparée en corrélant les signaux reçus et enregistrés soit par des signaux construits à partir de la dite séquence élémentaire, augmentée, avant et après de parties d'une durée au moins égale au temps d'écoute, obtenues par permutation circulaire, soit respectivement de la dite séquence élémentaire. Elle est caractérisée en ce que l'on forme les signaux appliqués aux différents vibrateurs à partir d'un signal périodique dont l'amplitude et les dérivées par rapport au temps de l'amplitude s'annulent au début et à la fin de chaque période, et tel que son intégrale sur une période est nulle.

L'intégrale sur une période étant nulle, on évite ainsi que le spectre de fréquence ne soit centré sur la fréquence nulle (qui ne peut bien sûr pas être émise dans la pratique), et donc les déformations du signal réel qui en découlent.

Suivant un mode de réalisation, on utilise comme signal périodique un signal de fréquence f, de la forme $\sin 2\pi.f.t.(1 - \cos 2.\pi.f.t)$.

Avec cette condition supplémentaire imposée au signal périodique, la séparation obtenue des contributions des différentes sources sismiques aux signaux enregistrés est bien meilleure.

Suivant un mode préféré de mise en oeuvre, on forme les séquences élémentaires par modulation en phase du signal périodique et on applique ces séquences à des vibrateurs.

On applique par exemple une même séquence de pilotage à tous les vibrateurs, avec décalage et permutation circulaire, les décalages en temps entre deux séquences étant au moins égaux au temps d'écoute, et la durée de la séquence élémentaire de pilotage étant au moins égale à la somme des décalages et du temps d'écoute.

Suivant un autre mode de mise en oeuvre, on pilote les vibrateurs par un ensemble connecté de plusieurs séquences à intercorrélation minimale, chaque vibrateur émettant une vibration avec sa séquence propre indépendamment des autres vibrateurs.

Suivant un autre mode de mise en oeuvre, on combine les deux modes précédents en répartissant les vibrateurs en plusieurs groupes, et on affecte à chaque groupe une séquence pseudo aléatoire appartenant à un même groupe de séquences à intercorrélation minimale, les différents vibrateurs d'un même groupe étant pilotés par la même séquence élémentaire avec les dits décalages.

Le dispositif de prospection ou de surveillance d'une formation par ondes élastiques selon l'invention, comprend au moins un groupe de m vibrateurs, un ensemble de pilotage adapté à appliquer aux différents vibrateurs, des séquences élémentaires formées par modulation en phase d'un signal périodique par des séquences pseudo aléatoires, des récepteurs sismiques couplés avec le terrain, un système d'acquisition et d'enregistrement des signaux sismiques renvoyés par les discontinuités du sous-sol en réponse aux signaux périodiques émis et un système de traitement des signaux sismiques enregistrés, par corrélation avec une partie des signaux périodiques émis. L'ensemble de pilotage comporte un générateur de signaux périodiques et un ensemble de modulation pour former des séquences élémentaires modulées en phase par une séquence pseudo aléatoire, et des moyens de connexion pour appliquer simultanément aux différents vibrateurs de chaque groupe, les signaux produits par l'ensemble de modulation.

Suivant un premier mode de réalisation, l'ensemble de modulation comporte des moyens pour engendrer au moins une séquence pseudo aléatoire de pilotage, des moyens de décalage pour former au moins un ensemble de m séquences élémentaires respectivement décalées dans le temps les unes par rapport aux autres, des moyens de modulation en phase des signaux périodiques engendrés par le dit générateur respectivement par les m séquences élémentaires, générant m signaux périodiques modulés en phase.

Suivant un autre mode de réalisation, l'ensemble de modulation comporte des moyens pour engendrer au moins une séquence pseudo aléatoire de pilotage, des moyens de modulation pour moduler, par la dite séquence, les signaux périodiques engendrés par le générateur, et des moyens de décalage pour produire m signaux périodiques modulés décalés dans le temps les uns par rapport aux autres.

Le dispositif comporte par exemple p groupes de vibrateurs, et l'ensemble de pilotage est adapté à engendrer p séquences élémentaires à intercorrélation minimale et à appliquer ces séquences avec un décalage aux vibrateurs de chaque groupe.

Suivant un mode de mise en oeuvre du dispositif, on installe les vibrateurs de façon permanente pour la surveillance sismique d'une zone souterraine.

## Présentation sommaire des figures

D'autres caractéristiques et avantages de la méthode et du dispositif selon l'invention, apparaîtront à la lecture de la description ci-après, en se référant aux dessins annexés où :

- les Fig.1a à 1b montrent des exemples de signaux obtenus par déplacement de phase ;
- la Fig. 2 montre un exemple de signal périodique dont la dérivée temporelle s'annule au début et à la fin de chaque période;
- les Fig.3a à 3C montrent des exemples de signaux obtenus par corrélation par une séquence décalée ;
- les Fig.4a à 4e montrent différents signaux enregistrés correspondant à deux sources périodiques modulées en phase émettant simultanément ;
- la Fig.5 montre schématiquement le dispositif ; et
- la Fig.6 montre l'ensemble de pilotage des différents vibrateurs.

## Description détaillée

On va considérer dans la suite la formation des signaux de pilotage obtenus par codage par des séquences pseudo aléatoires, d'un signal périodique qui a) s'annule au début et à la fin de chaque période, dont b) la dérivée par rapport au temps elle aussi s'annule au début et à la fin de chaque période et tel c) que son intégrale sur une période est nulle.

Parmi tous les signaux possibles possédant cette propriété, on peut choisir par exemple un signal de la forme $\sin 2\pi.f.t.(1 - \cos 2.\pi.f.t)$ (Fig. 2).

## Corrélation par une séquence décalée

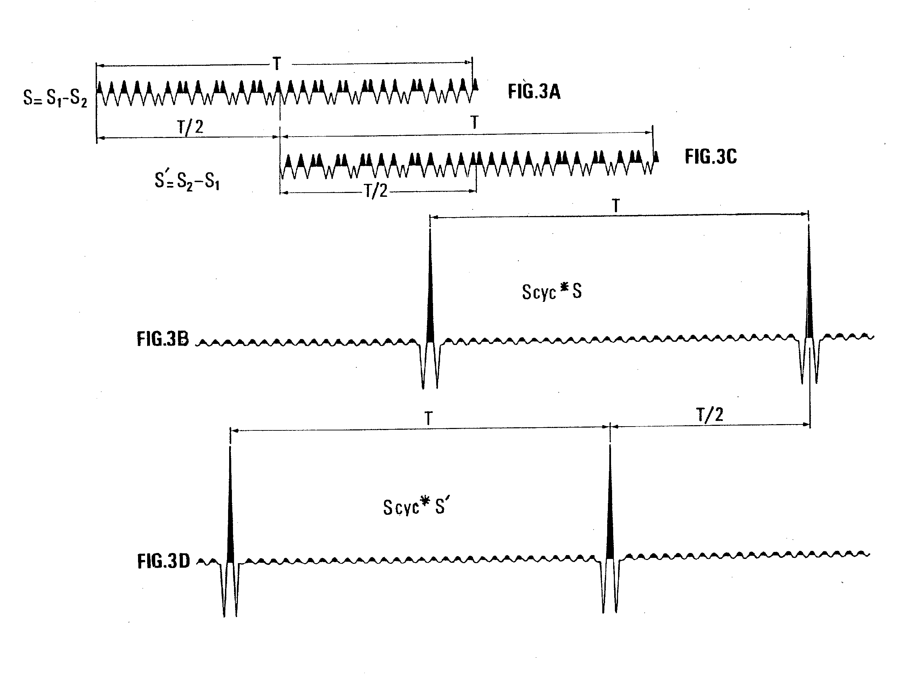

Soit un signal périodique de fréquence $f_c$ (et de période $T_c = \frac{1}{f_c}$ ) modulé en phase par une séquence SBLM (Fig. 1A). La séquence S ainsi formée (Fig. 1B) a une durée $T_s = (2^n - 1)T_c$, avec n entier. On décompose la séquence S en deux sous-séquences $S_1$, composée des $2^{N-1}$ premières périodes de porteuse de S et $S_2$, composé du reste de la séquence, soit $2^{n-1}-1$ périodes de porteuse, $S = (S_1 S_2)$ (Fig.3a). Soit $S_{cyc}$ le signal périodisé à partir de la séquence S, c'est-à-dire composé de cycles (S S S ...). La corrélation de $S_{cyc}$ par la séquence élémentaire S donne (Fig.3b) des pics espacés de la durée de la séquence $T_s$. Si l'on construit une autre séquence SBLM par décalage de $2^{n-1}$ termes et complément par permutation circulaire, soit la séquence $S'=(S_2 S_1)$ (Fig.3c), la corrélation de $S_{cyc}$ par S' donne également des pics espacés les uns des autres d'une durée $T_s$ (Fig.3d). Ces pics seront décalés d'un temps $2^{n-1}T_c$, correspondant à la durée de S1, par rapport aux pics de la corrélation $S_{cyc} * S$ .

## Sismique terrestre - temps de vibration et temps d'écoute

En prospection sismique terrestre, la source vibre en point fixe et on interrompt sa vibration le temps nécessaire pour la déplacer jusqu'à une position suivante et la coupler avec le sol. Il convient donc de déterminer les relations entre la durée du cycle séquence élémentaire, la durée de vibration, et le temps d'écoute. On désigne ci-après par « temps d'écoute », le temps de trajet maximal entre une source et un récepteur d'ondes, d'une onde élastique qui va se réfléchir sur le réflecteur le plus profond de la zone explorée.

On considère un réflecteur souterrain au temps t (temps nécessaire pour que l'onde sonore aille de la source au(x) récepteur en se réfléchissant sur le réflecteur). Si la source émet une vibration cyclique $S_{cyc}$ de séquence élémentaire S, l'enregistrement récupérera cette vibration à partir du temps t. La corrélation par la séquence élémentaire S donnera un pic au temps t, c'est-à-dire un signal entre $t - T_c$ et $t + T_c$ où $T_c$ est la période de la porteuse, d'autres pics espacés de multiples de la durée de la séquence élémentaire $T_s$, et un bruit minimal entre les pics, donc entre $t - T_s + T_c$ et $t + T_s - Tc$.

Pour un réflecteur au temps 0, on aura donc un signal étroit de 0 à $T_c$ et un plateau à bruit minimal jusqu'à $T_s - T \geq T_e$. Pour un réflecteur à un temps $T_c < t \leq Te \leq T_s - T_c$, on aura un signal étroit entre $t - T_c$ et $t + T_c$ et un plateau à bruit de corrélation minimal de 0 à $t - T_c$ et de $t + T_c$ à $T_e$. La corrélation de $S_{cyc}$ par sa séquence élémentaire S permet de retrouver la série de coefficients de réflexion, convoluée par un signal à trois arches de largeur totale $2T_c$.

Pour une corrélation sur un temps égal au temps d'écoute $T_e$, le signal émis peut être limité à une portion du signal cyclique $S_{cyc}$ de durée $T_s + 2T_e$ égale à la somme de la durée de la séquence et de deux fois le temps d'écoute, la séquence élémentaire occupant le centre de cette portion de signal cyclique.

De la même façon, on peut émettre un signal composé d'une seule séquence élémentaire et corréler l'enregistrement de signaux réfléchis par une portion de répétition cyclique de cette séquence élémentaire de durée $T_s + 2T_e$, cette séquence élémentaire occupant le centre de cette portion de signal cyclique.

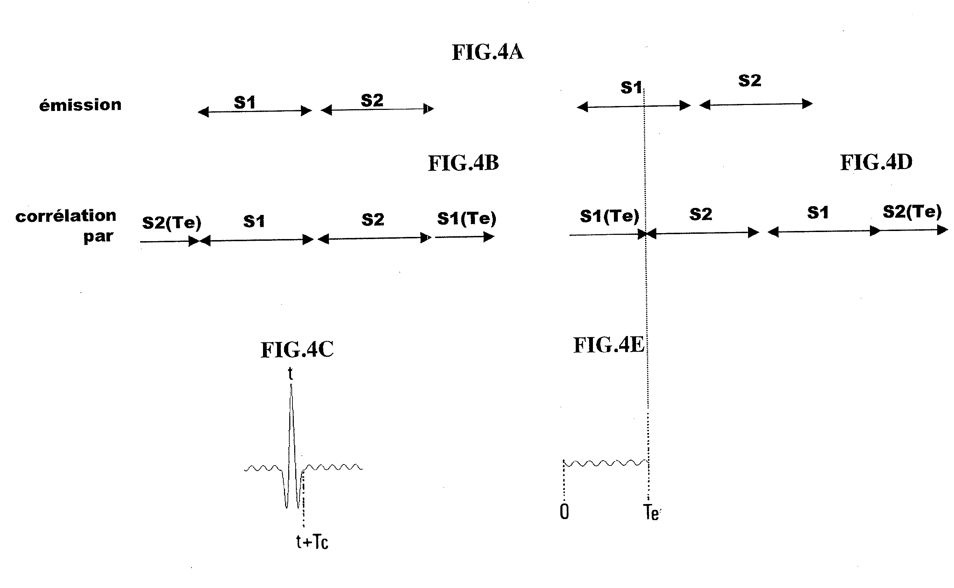

On considère le cas où l'on enregistre simultanément deux sources vibrant l'une avec le signal S, de durée au moins égale au double du temps d'écoute, décomposée en deux sous-séquences S1 et S2, chaque sous-séquence étant égale ou supérieure au temps d'écoute, l'autre vibrant avec la séquence décalée et complétée par permutation circulaire composée des deux séquences S2 et S1. Le mécanisme de la séparation de ces deux enregistrements est illustré par les Fig. 4a à 4e.

Considérons une réflexion provenant de l'une des deux sources simultanées, qui émet, par exemple, un signal S, d'une durée supérieure à deux fois le temps d'écoute, décomposable en deux sous-séquences, chacune plus longue que le temps d'écoute, S1 et S2 (Fig. 4a). Cette réflexion, sera un signal semblable au signal émis, pondéré par le coefficient de réflexion et débutant au temps d'arrivée t. Le signal de corrélation correspondant (Fig. 4b) sera construit en ajoutant après la séquence d'émission S1S2 une portion de la sous-séquence S1, commençant au début de la sous-séquence et d'une durée au moins égale au temps d'écoute, et, avant cette séquence centrale, une portion de la sous-séquence S2, d'une durée au moins égale au temps d'écoute, se terminant à la fin de la sous-séquence. La corrélation de la réflexion par ce signal de corrélation (S2(Te) S1 S2 S1(Te)) sur une longueur égale au temps d'écoute fera apparaître un pic au temps t (Fig. 4c), lorsque la séquence centrale S1S2 du signal de corrélation sera en face de la réflexion. La corrélation de la réflexion provenant de la première source par le signal de corrélation correspondant au signal décalé S2S1, émis par la deuxième source, construit en décalant le signal de corrélation de la première source de la durée de S1 et en complétant par permutation circulaire (Fig.4d), ne donnera, pendant la durée du temps d'écoute, qu'un bruit de corrélation minimal. De la même façon, la corrélation d'une réflexion provenant de la deuxième source par la séquence de corrélation correspondant à la deuxième source fera apparaître un pic de corrélation au temps d'arrivée de cette réflexion, alors que la corrélation par la séquence de corrélation correspondant à la première source ne donnera qu'un bruit de corrélation maintenu à un niveau minimal.

La corrélation, sur la durée du temps d'écoute, des enregistrements, où se superposent les réflexions des ondes émises par deux sources simultanées, tour à tour par les séquences de corrélation correspondant à chacune des deux sources permet ainsi de séparer les réflexions provenant de l'une et l'autre source.

## Généralisation à m sources

On peut généraliser le résultat précédent pour m vibrateurs. Considérons m vibrateurs vibrant simultanément pendant une durée $T_v = (m-1)T_e$. Le signal émis par le premier vibrateur est une séquence élémentaire de durée au moins égale au produit du nombre m de vibrateurs vibrant simultanément par le temps d'écoute soit $T_s \geq mT_e$. Cette séquence peut être décomposée en m morceaux de durée $S_1, S_2,..., S_n$ supérieure ou égale au temps d'écoute. La corrélation de l'enregistrement d'un signal réfléchi, commençant à arriver au temps, par le signal de corrélation $(S_n, S_1, S_2..., S_n, S_1)$, donne un pic au temps t et un bruit de corrélation très faible partout ailleurs entre 0 et $T_e$. La corrélation de l'enregistrement entre 0 et $T_e$ par l'une quelconque des séquences déduites de la première séquence par permutation circulaire avec un décalage d'un multiple de $T_e$ : $(S_2, S_3,..., S_n, S_1)$, $(S_3,..., S_n, S_1, S_2)$, ..., $(S_n, S_1, S_2..., S_{n-1})$ ne donnera qu'un bruit de corrélation minimum.

Si un deuxième vibrateur vibre en même temps que le premier avec une séquence décalée et complétée par permutation circulaire $S'= S_2S_3...S_n$, la corrélation par S ne fera apparaître qu'un bruit de corrélation minimal. Seule la corrélation par S' fera apparaître un pic au temps t.

L'enregistrement simultané de plusieurs vibrateurs peut ainsi être décomposé en composantes liées à chacun des vibrateurs par corrélations successives avec des séquences décalées du temps d'écoute et complétées à droite et à gauche par les sous-séquences les plus proches du point de vue de la permutation circulaire, ou, si ces sous-séquences sont supérieures au temps d'écoute, par des portions d'une durée égale au temps d'écoute.

## Exemple

On considère cinq vibrateurs, vibrant simultanément avec des séquences SBLM de $2^{10} - 1 = 1023$ termes modulant une porteuse à 60 Hz et déduites les unes des autres par décalage et permutation circulaire. La durée de la séquence sera donc $\frac{1023}{60} \sim 17$ secondes. Le temps d'écoute correspondra (à quelques périodes de porteuse près) au cinquième de la durée de la séquence, soit $\frac{17}{5} \sim 3,4$ secondes. La durée de la vibration (simultanée) des vibrateurs sera 17 secondes. Le signal de corrélation aura une longueur de 17+2x3.4=23.8 s.

## Séquences à corrélation minimale

Si l'on accepte un bruit de corrélation de -30dB, on peut utiliser par exemple un dispositif d'émission comprenant 4 lignes de 5 vibrateurs chacune, vibrant simultanément pilotés par une séquence de 34 s, et pour un temps d'écoute de 6,8 s. Sur une première ligne, les vibrateurs vibrent simultanément ou non, avec la même séquence convenablement décalée comme on l'a vu. On pilote les lignes suivantes de vibrateurs par des séquences appartenant à l'ensemble de séquences à corrélation minimale auquel appartient la première séquence. Les vibrateurs de chaque ligne partent dès qu'ils sont sur site et prêts à vibrer. Il n'est pas nécessaire de se préoccuper de synchroniser les départs des différentes lignes. Ainsi, on peut obtenir un gain sensible de la productivité

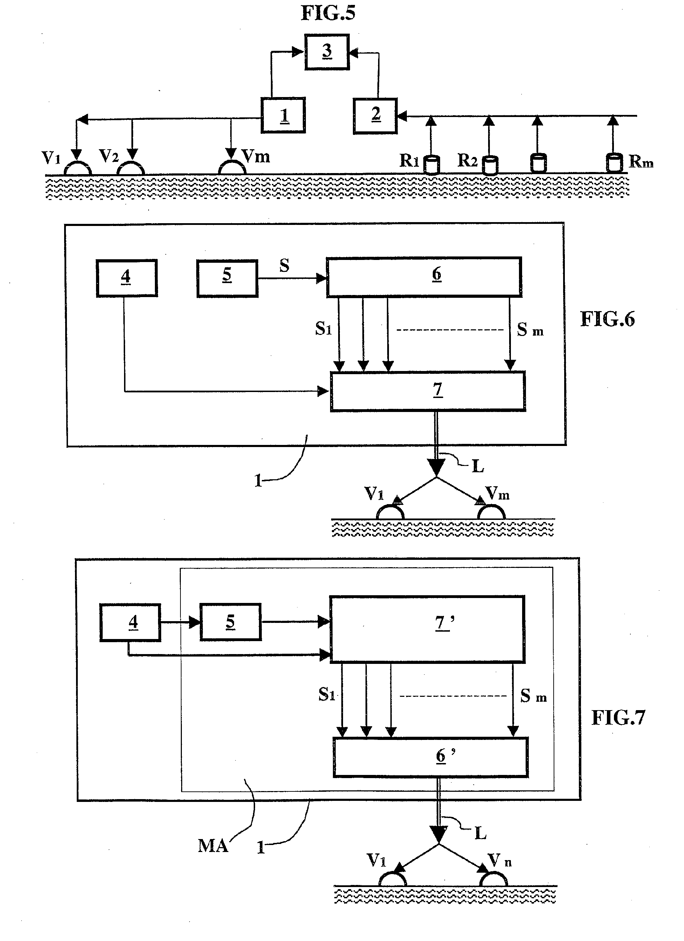

Le dispositif de mise en oeuvre comporte (Fig. 5) un ensemble de pilotage 1 destiné à appliquer à m vibrateurs couplés avec le terrain, des signaux périodiques modulés en phase, un système 2 pour acquérir et enregistrer les signaux captés par des récepteurs sismiques R1-Rk couplés avec le terrain en réponse aux signaux périodiques émis, et un système de traitement 3 des signaux sismiques captés par les récepteurs R1 à Rk, tel qu'un ordinateur programmé, par corrélation avec les signaux émis.

L'ensemble de pilotage 1 comporte un générateur 4 de signaux périodiques, et un ensemble de modulation MA destiné à générer à partir des signaux périodiques, m signaux périodiques modulés en phase pour leur applications aux m vibrateurs V1-Vm.

Suivant un premier mode de réalisation (Fig. 6), l'ensemble de modulation MA comporte des moyens 5 pour engendrer au moins une séquence pseudo aléatoire de pilotage, des éléments 6 de décalage pour former, à partir de la dite séquence, au moins un ensemble de m séquences binaires pseudo aléatoires respectivement décalées dans le temps les unes par rapport aux autres. Les décalages sont répartis sur la durée de la séquence de pilotage en fonction du nombre m de vibrateurs de chaque groupe.

Un dispositif 7 de modulation en phase est connecté au générateur de signaux 4 et aux éléments de décalage 6 des signaux périodiques et génère m signaux périodiques modulés en phase. Le dispositif 7 est connecté par des moyens de connexion (L) aux différents vibrateurs (V1-Vm) de chaque groupe.

Suivant un deuxième mode de réalisation (Fig. 7), l'ensemble de modulation MA comporte des moyens 5 pour engendrer au moins une séquence pseudo aléatoire de pilotage, un dispositif de modulation 7' pour moduler les signaux périodiques engendrées par le générateur (4) par la dite séquence, des moyens de décalage 6' pour produire m signaux périodiques modulés décalés dans le temps les uns par rapport aux autres. Le dispositif 7' est connecté pareillement aux différents vibrateurs (Vl-Vm) de chaque groupe par des moyens de connexion L.

On peut choisir le type de séquence pseudo aléatoire que l'on veut pour moduler en phase des signaux.

## Revendications

1. Méthode pour réaliser des opérations de prospection ou de surveillance d'une formation souterraine par ondes élastiques, comportant l'émission simultanée dans le sol d'ondes sismiques par plusieurs sources sismiques (V1 à Vm) pilotées chacune par un signal composé soit d'une séquence élémentaire formée par codage d'un signal par des séquences pseudo aléatoires, chaque séquence élémentaire étant d'une durée au moins égale au produit du nombre de sources sismiques vibrant simultanément par le temps d'écoute, soit respectivement de cette séquence élémentaire augmentée avant et après de parties d'une durée au moins égale au temps d'écoute, la réception et l'enregistrement des signaux renvoyés par les discontinuités du sous-sol en réponse aux signaux émis, et le traitement des signaux enregistrés, la contribution respective de chacune des différentes sources sismiques étant séparée en corrélant les signaux reçus et enregistrés soit par des signaux construits à partir de la dite séquence élémentaire, augmentée, avant et après de parties d'une durée au moins égale au temps d'écoute, obtenues par permutation circulaire, soit respectivement de la dite séquence élémentaire, **caractérisée en ce que** l'on forme les signaux appliqués aux différents vibrateurs à partir d'un signal périodique dont l'amplitude et les dérivées par rapport au temps de l'amplitude s'annulent au début et à la fin de chaque période, et tel que son intégrale sur une période est nulle.

2. Méthode selon la revendication 1, **caractérisée en ce que** l'on utilise comme signal périodique, un signal de fréquence f, de la forme $\sin 2\pi.f.t.(1 - \cos 2.\pi.f.t)$.

3. Méthode selon la revendication 1, **caractérisée en ce que** l'on forme les séquences élémentaires par modulation en phase du signal périodique et on applique ces séquences à des vibrateurs.

4. Méthode selon la revendication 3, **caractérisée en ce que** l'on applique une même séquence de pilotage à tous les vibrateurs, avec décalage et permutation circulaire, les décalages en temps entre deux vibrateurs étant au moins égaux au temps d'écoute, et la durée de la séquence élémentaire de pilotage étant au moins égale à la somme des décalages et du temps d'écoute.

5. Méthode selon la revendication 3, **caractérisée en ce que** l'on pilote les vibrateurs par un ensemble connecté de plusieurs séquences à intercorrélation minimale, chaque vibrateur émettant une vibration avec sa séquence propre indépendamment des autres vibrateurs.

**6.** Méthode selon les revendications 4 et 5, **caractérisée en ce que** l'on répartit les vibrateurs en plusieurs groupes, et on affecte à chaque groupe une séquence pseudo aléatoire appartenant à un même groupe de séquences à intercorrélation minimale, les différents vibrateurs d'un même groupe étant pilotés par la même séquence élémentaire avec les dits décalages.

**7.** Dispositif de prospection ou de surveillance d'une formation souterraine par ondes élastiques, comprenant au moins un groupe de m vibrateurs (V1-Vm), un ensemble (1) de pilotage des différents vibrateurs par des signaux périodiques modulés en phase, des récepteurs sismiques (R1-Rk) couplés avec le terrain, un système (2) d'acquisition et d'enregistrement des signaux sismiques renvoyés par les discontinuités du sous-sol en réponse aux signaux périodiques émis et un système (3) de traitement des signaux sismiques enregistrés, par corrélation avec une partie des signaux périodiques émis, **caractérisé en ce que** l'ensemble de pilotage (1) comporte un générateur (4) de signaux et un ensemble de modulation (1) pour former m séquences élémentaires modulées en phase par une séquence pseudo aléatoire et des moyens de connexion (L) pour appliquer simultanément aux différents vibrateurs (V1-Vm) de chaque groupe, les signaux produits par l'ensemble de modulation.

**8.** Dispositif selon la revendication 7, **caractérisé en ce que** l'ensemble de modulation (MA) comporte des moyens (5) pour engendrer au moins une séquence pseudo aléatoire de pilotage, des moyens de décalage (6) pour former au moins un ensemble de m séquences élémentaires respectivement décalées dans le temps les unes par rapport aux autres, des moyens (7) de modulation en phase des signaux périodiques engendrés par le dit générateur (4) respectivement par les m séquences élémentaires, générant m signaux périodiques modulés en phase.

**9.** Dispositif selon la revendication 7, **caractérisé en ce que** l'ensemble de modulation (MA) comporte des moyens (5) pour engendrer au moins une séquence pseudo aléatoire de pilotage, des moyens de modulation (7') pour moduler, par la dite séquence, les signaux périodiques engendrées par le générateur (4), des moyens de décalage (6') pour produire m signaux périodiques modulés décalés dans le temps les uns par rapport aux autres.

**10.** Dispositif selon l'une des revendications 6 à 8, **caractérisé en ce que** l'ensemble de pilotage (1) est adapté à émettre durant un temps dépendant de la durée de chaque séquence de pilotage et d'un temps d'écoute des signaux vibratoires reçus.

**11.** Dispositif selon l'une des revendications 7 à 10, **caractérisé en ce qu'**il comporte p groupes de vibrateurs, l'ensemble de pilotage (1) étant adapté à engendrer p séquences élémentaires à intercorrélation minimale et à appliquer ces séquences avec un décalage aux vibrateurs de chaque groupe.

**12.** Dispositif selon l'une des revendications 7 à 11, **caractérisé en ce que** les vibrateurs sont installés de façon permanente pour la surveillance sismique d'une zone souterraine.

FIG.1A

$$\text{PERIOD} \quad T = \frac{2^N - 1}{f_c}$$

FIG.1B

$$t = \frac{1}{f_c}$$

FIG.2

$S = S_1 - S_2$ FIG.3A

$S' = S_2 - S_1$ FIG.3C

Scyc*S

FIG.3B

Scyc*S'

FIG.3D

EP 1 341 004 A1

## FIG.4A

émission     ←— **S1** —→ ←— **S2** —→

## FIG.4D

**S1**     **S2**

←————→ ←————→

## FIG.4B

corrélation
par

**S2(Te)** **S1** **S2** **S1(Te)**

→←——→←——→←——→

## FIG.4E

**S1(Te)** **S2** **S1** **S2(Te)**

——→←————→←———→←———→

## FIG.4C

t

$t+Tc$

0     Te

EP 1 341 004 A1

**FIG.5**

**FIG.6**

**FIG.7**

**Office européen
des brevets**

**RAPPORT DE RECHERCHE EUROPEENNE**

Numéro de la demande

EP 03 29 0400

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| D,X | FR 2 589 587 A (INST FRANCAIS DU PETROL) 7 mai 1987 (1987-05-07) | 7-10,12 | G01V1/00 |
| A | * page 7, ligne 1 - page 11, ligne 8 * | 1,3,4 | |
| D,A | US 3 234 504 A (RIEBLE WISCHMEYER CARL) 8 février 1966 (1966-02-08) * colonne 2, ligne 71 - colonne 3, ligne 26 * * colonne 4, ligne 34 - ligne 50 * * colonne 5, ligne 55 - ligne 60; revendication 1 * | 1,3,4 | |
| D,A | US 3 264 606 A (HUBBARD CHARLES L ET AL) 2 août 1966 (1966-08-02) * revendication 1 * | 1 | |

**DOMAINES TECHNIQUES RECHERCHES (Int.Cl.7)**

G01V

Le présent rapport a été établi pour toutes les revendications

| Lieu de la recherche | Date d'achèvement de la recherche | Examinateur |
|---|---|---|
| LA HAYE | 11 juin 2003 | Lorne, B |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...........................................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**   EP 03 29 0400

La présente annexe indique les membres de la famille de brevets relatifs aux documents brevets cités dans le rapport de
recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

11-06-2003

| Document brevet cité au rapport de recherche | | Date de publication | Membre(s) de la famille de brevet(s) | | Date de publication |
|---|---|---|---|---|---|
| FR 2589587 | A | 07-05-1987 | FR | 2589587 A1 | 07-05-1987 |
| | | | CA | 1261055 A1 | 26-09-1989 |
| | | | DE | 3668073 D1 | 08-02-1990 |
| | | | EP | 0223667 A1 | 27-05-1987 |
| | | | JP | 1882849 C | 10-11-1994 |
| | | | JP | 6005300 B | 19-01-1994 |
| | | | JP | 62175686 A | 01-08-1987 |
| | | | NO | 864300 A ,B, | 04-05-1987 |
| | | | US | 4780856 A | 25-10-1988 |
| US 3234504 | A | 08-02-1966 | AUCUN | | |
| US 3264606 | A | 02-08-1966 | AUCUN | | |

EPO FORM P0460

Pour tout renseignement concernant cette annexe : voir Journal Officiel de l'Office européen des brevets, No.12/82